# EUROPEAN PATENT APPLICATION

(11) **EP 3 098 115 A1**
(43) Date of publication of application: **30.11.2016**
(21) Application number: 15001589.9
(22) Date of filing: 27.05.2015
(51) Int. Cl.: B60R 16/03

(54) **A METHOD AND CONTROL UNIT FOR AUTOMATIC CONTROLLING AN ELECTRICAL ENERGY SUPPLY TO AN ELECTRICAL DC MOTOR OF A DRIVE UNIT OF A ROTATABLE VEHICLE MIRROR MODULE**

(71) Applicant: Ficomirrors Polska sp. z o.o., 41-300 Dabrowa Górnicza (PL)
(72) Inventor: Márquez de la Torre, Manuel, 08232 Viladecavalls, Barcelona (ES)
(74) Representative: Lukaszyk, Szymon

(57) **Abstract**

The present invention relates to a method of controlling an electrical energy supply to an electrical DC motor of a driving unit of a vehicle mirror device rotatable between mechanically predetermined positions comprising the steps of:
a) measuring an actual electric current (I) supplied to the motor;
d) comparing the measurements of the actual electric current (I) supplied to the motor with the cut-off current threshold (Ithr);
e) cutting off an electrical energy supply to the motor if the actual electric current (I) is equal to or greater than the cut-off current threshold (Ithr).
In order to provide autonomous adaptation to motor temperature changes the method additionally comprises
b) determining the maximal inrush current (Imax) for the motor starting time period (Ts);
c) determining the cut-off current threshold (Ithr) based on the maximal inrush current (Imax), in particular as amounting 0.5-1.1 of the maximal inrush current (Imax).

The present invention relates to a control system realizing the above method of automatic controlling.

## Description

The present invention relates to a method of automatic controlling an electrical energy supply to an electrical DC motor of a drive unit of a vehicle mirror module rotatable between mechanically predetermined positions, substantially between two mechanically predetermined end positions based on measurements of current drawn by the DC motor and measurements of the DC motor resistance. Such a method according to the present invention comprises the steps of: measuring an actual electric current supplied to the motor; comparing the measurements of the actual electric current supplied to the motor with the cut-off current threshold; and cutting off an electrical energy supply to the motor if the actual electric current is equal to or greater than the cut-off current threshold.

The present invention relates also to a control system for controlling an electrical energy supply to an electrical DC motor of a driving unit of a vehicle mirror device rotatable between mechanically predetermined positions comprising realizing the above method of automatic controlling.

### Prior art

Nowadays a remotely controlled electromechanical drive unit is commonly used for power folding of a vehicle mirror module, such as rear-view mirror module.

A rear-view mirror module comprises a enclosure in which a mirror glass is rotationally mounted, wherein the enclosure is rotatable in relation to vehicle body. A rear-view mirror module is power folded in a bidirectional and two-position manner between two mechanically predetermined end positions: an unfolded end position (a driving position) and a folded end position (for example a parking position); by means of said remotely controlled electromechanical drive unit which is also arranged in the rotatable module enclosure.

Further rotation of a mirror module beyond the predetermined end positions is mechanically limited. A precise adjustment of a view in a mirror glass is effected using a continuous regulation of the mirror glass position in relation to its module enclosure.

An electromechanical drive unit of a mirror module is driven by means of an electrical DC motor supplied with an electrical energy from a vehicle battery. A drive unit comprises also a control unit that controls an operation of DC motor by switching on a current supply form the battery to the motor in response to receiving a remote signal containing a request for changing a given end position to the other end position and then automatically cutting off the battery current supply after achieving the requested predetermined end position.

In known solutions said automatic current supply cutting off most commonly occurs after a detection of an excess of a predetermined current threshold value by the motor supply current which significantly increases of achieving an end position by a mirror module in a consequence of stoppage of a further module rotation resulting in a stall state of the DC motor.

A mirror module is a vehicle external accessory the temperature of which changes within the very wide range (the limits of the range depend for example on a climatic zone) and many a time changes very quickly, for example in a case of a significant sun exposure change or moving out of a garage.

Therefore typical previous base methods bases on a simple detection of DC motor supply current increase in a result of its stall state after in the end position have been improved by considering an DC motor temperature change influence on the motor stall current value. An exemplary solution of such an improved method of mirror module power folding has been disclosed in the US patent application US2013088180 describing a vehicular outside-mirror control method that may improve durability of a motor by appropriately controlling the motor according to a condition of peripheral temperature so as to prevent the motor implementing a folding function of the outside mirror from being damaged and improve assembling workability and save costs of a vehicle by reducing the number of wires connected with the door while performing various functions to be implemented by the outside mirror.

However, as disclosed in US2013088180, a stall current threshold is adjusted according to the current temperature only within a predetermined temperature range, and the control method described therein requires an additional employment of a peripheral temperature sensor.

### The object of the invention

The object of the present invention is to provide a simple and reliable method of automatic controlling an electrical energy supply to an electrical DC motor of a drive unit of a vehicle mirror module rotatable between two mechanically predetermined end positions that shall autonomously adapt to motor temperature changes.

The object of the present invention is also to provide such a method that shall furthermore autonomously adapt also to an accumulator supply voltage changes.

According to the present invention the term "autonomously" means without any further additional components (such as for example temperature sensor and a data map for stall current of a motor in a predetermined temperature range as required in US2013088180), instead of a typical current sensor and optionally voltage sensor known from the prior art solutions.

The object of the present invention is also to provide a control system for controlling an electrical energy supply to an electrical DC motor of a drive unit of a vehicle mirror module rotatable between mechanically predetermined positions.

### Summary of the invention

In order to accomplish the aforementioned and other objects, according to the present invention it is provided a method of controlling an electrical energy supply to an electrical DC motor of a driving unit of a vehicle mirror device rotatable between mechanically predetermined positions, as described at the outset, comprising the steps of:
a) measuring an actual electric current supplied to the motor;
d) comparing the measurements of the actual electric current supplied to the motor with the cut-off current threshold; and
e) cutting off an electrical energy supply to the motor if the actual electric current is equal to or greater than the cut-off current threshold;
which method is characterized in that it additionally comprises
b) determining the maximal inrush motor current for the motor starting time period;
c) determining the cut-off current threshold based on the maximal inrush motor current, in particular as amounting 0.5-1.1 of the maximal inrush current.

In preferred embodiments of the method in the step e) an electrical energy supply to the motor is cut off if the actual electric motor current is equal to or greater than the cut-off current threshold for the predetermined cut-off time period.

Furthermore according to the present invention it is also provided a method of controlling an electrical energy supply to an electrical DC motor of a driving unit of a vehicle mirror device rotatable between mechanically predetermined positions comprising the step of:
a) measuring an actual electric current and actual electric voltage supplied to the motor;
which method is characterized in that
in the step a) it additionally comprises determining an actual motor resistance as a ratio of an actual electric voltage divided by the corresponding actual electric current; and additionally the method comprises the further steps of:
b) determining the minimal inrush motor resistance for the motor starting time period;
c) determining the cut-off resistance threshold based on the minimal inrush motor resistance, in particular as amounting 0.9-2.0 of the minimal inrush motor resistance;
d) comparing the actual motor resistance with the cut-off motor resistance threshold;
e) cutting off an electrical energy supply to the motor if the actual motor resistance is equal to or smaller than the cut-off resistance threshold.

In the step f) of this method an electrical energy supply to the motor is preferably cut off if the actual motor resistance is equal to or smaller than the cut-off resistance threshold for the predetermined cut-off time period.

According to the present invention it is also provided a control system for controlling an electrical energy supply to an electrical DC motor of a driving unit of a vehicle mirror device rotatable between mechanically predetermined positions comprising:
- a current sensor measuring an actual electric motor current supplied to the motor;
- a control unit cutting off a motor electrical energy supply if the actual electric current is equal to or greater than the cut-off current threshold,
which is characterized in that
the control unit additionally
determines the maximal inrush current for the motor starting time period; and then determines the cut-off current threshold based on the maximal inrush motor current, in particular as amounting 0.5-1.1 of the maximal inrush current.

Finally according to the present invention it is provided a control system for controlling an electrical energy supply to an electrical DC motor of a driving unit of a vehicle mirror device rotatable between mechanically predetermined positions comprising:
- a current sensor measuring an actual electric current supplied to the motor;
- a voltage sensor (9) measuring an actual electric voltage (U) supplied to the motor;
- a control unit cutting off a motor electrical energy supply if the actual electric current is equal to or greater than the cut-off current threshold;
wherein the method is characterized in that
the control unit additionally
- determines an actual motor resistance as a ratio of an actual electric voltage divided by the corresponding actual electric current;
- determines the minimal inrush motor resistance for the motor starting time period;
- determines the cut-off resistance threshold based on the minimal inrush motor resistance, in particular as amounting 0.9-2.0 of the minimal inrush resistance;
- compares the actual motor resistance with the cut-off motor resistance threshold; and
- cuts off an electrical energy supply to the motor if the actual motor resistance is equal to or smaller than the cut-off resistance threshold.

The proposed solutions provide a very reliable protection of a DC motor of rotatable mirror device driving unit against the overload during extended motor stall state in the end position that automatically and autonomously adapts to motor temperature changes without using any additional external signals representing temperature changes, except for basic electrical parameters (current and voltage) characterizing electrical energy flow to the DC motor of rotatable mirror device driving unit. Furthermore the solutions according to the present invention based on an actual motor resistance comparison against the resistance threshold calculated on the basis of the minimal inrush motor resistance take into account also changes of voltage value occurring during rotational repositioning of a mirror module.

Therefore the present invention provides adaptive algorithms for a DC motor stall detection at the extreme positions of the mirror folding mechanism based on current consumption and optionally based additionally on DC motor voltage. The solutions described herein using these algorithms provide suitable performance concerning a stall detection independently of ambient temperature and battery voltage.

### Brief description of figures

The exemplary embodiments of the present invention are presented below in connection with the attached drawings on which:
Fig. 1 is a schematic block diagram of the first embodiment of a control system according to the present invention;
Fig. 2 presents exemplary time course curves of an actual current supplied to an exemplary driving unit DC motor of a rotatable vehicle mirror device in a system of the present invention and according to a method of the present invention
Fig. 3 is a flow chart of an exemplary embodiment of a method according to the present invention;
Fig. 4 is a schematic block diagram of the second embodiment of a control system according to the present invention;
Fig. 5 is a flow chart of an exemplary second embodiment of a method according to the present invention.

### Description of invention embodiments

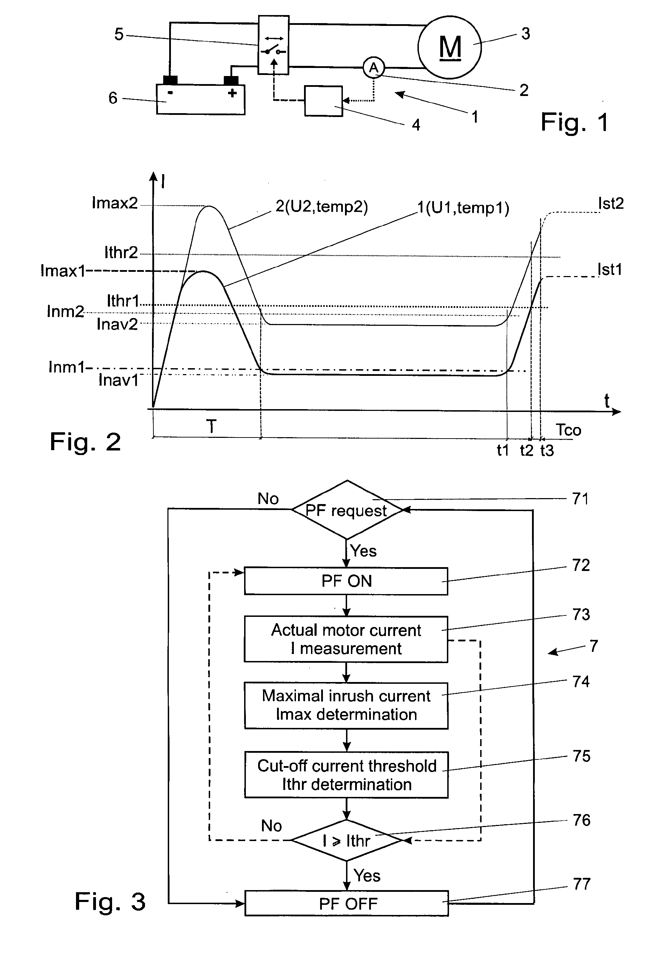

The control system 1 of an electric DC motor drive unit of a vehicle rotatable mirror module as presented in Fig. 1 comprises a current sensor 2 measuring an actual electric current I supplied to the drive unit DC motor 3 and a control unit 4 controlling by means of a switch 5 an electrical energy supply provided to the motor 3 from the vehicle battery 6. The current sensor 2 measurements are continuously transferred to the control unit 4.

The control unit 4 triggers the switch 5 on after receiving a signal of a request for a change of the mirror module end position (for example from a folded position to an unfolded position) from a remote button switch (not shown in the drawing) installed for example on the inner side of a vehicle door and pressed by a driver. The switch 5 is of course a bidirectional motor switch that enables to drive the motor 3 in two directions, and therefore the current sensor 5 has also a functionality of bidirectional current sensing.

The time course curve 1 of an actual current value I supplied at the battery 6 voltage U1 to the motor 3 of the temperature temp1 after an activation of the switch 5 and during the further operation of the control unit 4 according to the present invention is visualized in the Fig. 2.

In the first stage of the DC motor 3 operation, called a starting time period Ts, the current supplied to the motor 3 is substantially limited only by the by the source capacity and DC resistance of the motor 3 armature windings. Therefore during the motor 3 starting phase the time course of the current I has the form of a sharply rising pulse that reaches a peak value constituting the maximal inrush current Imax1 limited substantially only by the DC motor 3 resistance.

After the termination of the starting time period Ts, occurring after a predetermined period of time (for example after 75 ms) or after a detection of an actual motor current below the predetermined threshold value for example corresponding to the maximal nominal current Inm1 of the DC motor 3, the control unit 4 based on the current measurements I received from the current sensor 2 during the starting time period Ts firstly determines the maximal inrush current Imax1 and then based on this current Imax1 calculates the cut-off current threshold Ithr1 that shall be used later for determining when electrical energy supply to the motor 3 are to be cut-off. Off course the cut-off current threshold Ithr1 may not be smaller than the maximal nominal current Inm1. In the presented case the cut-off current threshold Ithr1 amounts approximately 0.8 of the maximal inrush current Imax1. Substantially the most preferable range of the cut-off current threshold values Ithr is from about 0.5 to 1.1 of the maximal inrush current Imax. The cut-off current threshold value Ithr is obviously stored in an appropriate memory for a later use in determining when to cut off the DC motor current supply.

In the next stage of DC motor 3 operation in a result of electromagnetic phenomenon related with the motor armature movement through the magnetic field, the motor 3 reaches its normal running speed and the current drawn by the motor stabilizes below the maximal nominal operational current substantially at the nominal average value Inav1.

After stopping the motor 3 in a result of physical reaching the end position by the mirror module at the time t1, the actual current I supplied to the motor 3 starts to increase toward the motor stall current value Ist1, limited substantially only by the DC motor resistance similarly as during the starting time period Ts, that is thus substantially the same as the maximal inrush current Imax1, assuming that during the mirror module power folding operation the temperature of the motor 3 and the voltage of the battery 6 have not changed.

During the whole operation of the motor 3 the control unit 4 continuously monitors the actual current value I supplied to the motor 3 and compares this value with the cut-off current threshold Ithr1 determined for the last motor starting period. When the control unit 4 determines at the time t2 that the actual current value I equals or exceeds the cut-off current threshold Ithr1, or at the time t3 that the actual current value I has been equal or exceeded the cut-off current threshold Ithr1 for the predefined cut-off time period Tco, what confirms the stoppage of the motor 3, then the control unit 4 switches the switch 5 off thus cutting off an electrical energy supply to the motor 3.

In most cases the control unit 3 shall transmit a deactivation signal to the switch 5 even before reaching the stall current value Ist1 by the motor 3 current.

Fig. 2 presents also an adaptive character of the solutions according to the present invention. The second curve 2 represents the time course of an actual current value I of a motor having respectively lower temperature temp2<temp1 and/or supplied with the higher battery voltage U2>U1 than the motor the current of which is represented by the curve 1. Changes in the temperature and/or voltage results in a significant increase of all motor characteristic current values Imax2, Ist2, Inm2, Inav2, however it does not affect the effectiveness of the control unit 1 operation as the change of the value Imax2 has been automatically reflected in a respective increase of the cut-off current threshold value Ithr2. Owing to this, normal operational currents Inm2, Inav2, that in a consequence of lowered temperature temp2 and/or increased voltage U2 are greater than the previous cut-off current threshold values Ithr, shall not cause inactivation of the switch 5 by the control unit 4.

Fig. 3 presents a flow chart of stages of an exemplary embodiment of a power folding method 7 according to the present invention that may be realized in the control system of Fig. 1. "Power folding" (PF) is a general designation of a function of an automatic repositioning (folding or unfolding) a rotatable vehicle mirror device from one end position into the another end position forced by the electrical DC motor driving unit.

The power folding process is initiated by receiving a request for repositioning a rotatable vehicle mirror device to the opposite end position (stage 71). During this initialization the power folding function is switched on (stage 72) and the electrical DC motor of a driving unit starts to be supplied with electrical energy from the vehicle battery and at the same time the current supplied to the motor starts to be continuously measured (stage 73). In the next stage 74 the maximal inrush current Imax for the motor starting time period is determined and subsequently the cut-off current threshold Ithr is determined based on the maximal inrush current Imax (stage 75). In most typical cases the threshold Ithr is determined as 0.5-1.1 of the maximal inrush current Imax. In the next stage 76 the consecutive measurements of the actual electric current values I supplied to the motor are compared with the cut-off current threshold Ithr. After determining in the stage 76 that the actual motor current I is equal to or greater than the cut-off current threshold Ithr, the electric energy supply to the motor is cut off in the stage 77 and the power folding function is switched off until receiving new PF request.

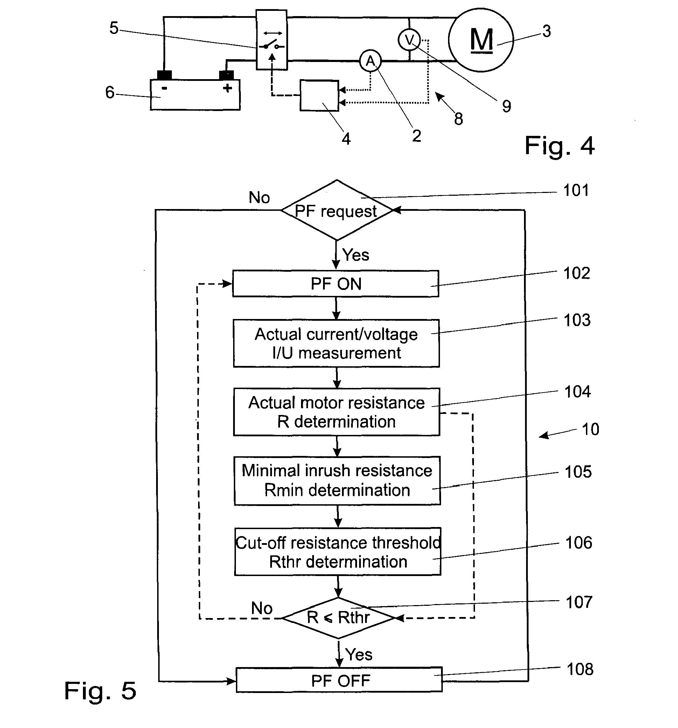

In comparison with the first control system 1 of Fig. 1, the second embodiment 8 of a control system according to the present invention of Fig. 4 additionally comprises a voltage sensor 9 measuring an actual electric voltage U supplied to the motor and a control unit 4 provided with a functionality of a determination of DC motor resistance R and of controlling the switch 5 based on this resistance R changes. Both current and voltage sensors 2, 9 outputs are connected to the control and the sensors continuously transfer to the control unit 4 their actual motor current and voltage measurement I, U. The control unit 4 is configured to determine an actual motor resistance value R as a ratio of an actual electric voltage U divided by the corresponding actual electric current I. Furthermore the control unit 4 is configured to determine the minimal motor resistance value Rmin of the motor resistance for the motor starting time period Ts and to determine the cut-off resistance threshold Rthr based on the Rmin and used in the determination when to cut off a DC motor current supply. Taking into account that the minimal inrush motor resistance Rmin is substantially the same as the motor resistance in the stall state of the DC motor and that during the normal operation of the motor after the motor starting time period the actual motor resistance is substantially greater than the minimal value Rmin, detecting during a normal operation a significant decrease of the actual motor resistance R is identified by the control unit 4 as achieving the requested end positon of the rotatable mirror device requiring cutting of the current supply to the motor in a stall state. Thus the control unit 4 is provided with a comparator means configured to compare the actual motor resistance R with the cut-off motor resistance threshold Rthr and providing the output signal used for inactivating the switch 5. The control unit 4 controls the state of the switch 5 based on power folding request statuses and results of a comparison of the value R against the threshold Rthr. After receiving PF request, the control unit 4 activates the switch 5 and in a case of determining that the actual motor resistance R is equal to or smaller than the threshold Rthr, it deactivates the switch 5 thus cuts off the motor current supply form a vehicle battery. Alternatively the switch 5 deactivation signal may be generated by the control unit 4 only after previous determining that the motor current values have been below the threshold Rthr constantly for the predetermined cut-off period.

When the control unit 4 determines at the time t2 that the actual current value I equals or exceeds the cut-off current threshold Ithr1, or at the time t3 that the actual current value I has been equal or exceeded the cut-off current threshold Ithr1 for the predefined cut-off time period Tco, what confirms the stoppage of the motor 3, then the control unit 4 switches the switch 5 off thus cutting off an electrical energy supply to the motor 3.

Fig. 5 presents a flow chart of stages of an another exemplary embodiment of a power folding method 10 according to the present invention that may be realized in the control system of Fig. 4.

Similarly as in the method 7, the power folding process is initiated by receiving a request for repositioning a rotatable vehicle mirror device to the opposite end position (stage 101). Subsequently the power folding function is switched on (stage 102). During the operation of the electrical DC motor of a driving unit the actual values of current I and voltage U supplied to the motor are continuously measured (stage 103). Subsequently on the basis of I and U measurements an actual motor resistance R is determined as a ratio of an actual electric voltage U divided by the corresponding actual electric current I (stage 104). In the next stage 105 the minimal inrush motor resistance Rmin is determined for the motor starting time period and subsequently the cut-off resistance threshold Rthr is determined based on this minimal value Rmin (stage 106). In most typical cases the threshold Rthr is determined as 0.9-2.0 of the minimal value Rmin. In the next stage 107, the consecutive determinations of the actual motor resistance values R are compared with the cut-off resistance threshold Rthr. After determining in the stage 107 that the actual motor resistance R is equal to or smaller than the cut-off resistance threshold Rthr, the electric energy supply to the motor is cut off in the stage 108 and the power folding function is switched off until receiving new PF request.

The above embodiments of the present invention are merely exemplary and some features may be exaggerated or minimized. These and other factors however should not be considered as limiting the spirit of the invention, the intended scope of protection of which is indicated in appended claims.

## Claims

1. A method of controlling an electrical energy supply to an electrical DC motor of a driving unit of a vehicle mirror device rotatable between mechanically predetermined positions comprising the steps of:
a) measuring an actual electric current (I) supplied to the motor;
d) comparing the measurements of the actual electric current (I) supplied to the motor with the cut-off current threshold (Ithr);
e) cutting off an electrical energy supply to the motor if the actual electric current (I) is equal to or greater than the cut-off current threshold (Ithr);
**characterized in that** it additionally comprises
b) determining the maximal inrush current (Imax) for the motor starting time period (Ts);
c) determining the cut-off current threshold (Ithr) based on the maximal inrush current (Imax), in particular as amounting 0.5-1.1 of the maximal inrush current (Imax).

2. The method of Claim 1, **characterized in that** in the step e) an electrical energy supply to the motor is cut off if the actual electric current (I) is equal to or greater than the cut-off current threshold (Ithr) for the predetermined cut-off time period (Tco).

3. A method of controlling an electrical energy supply to an electrical DC motor of a driving unit of a vehicle mirror device rotatable between mechanically predetermined positions comprising the steps of:
a) measuring an actual electric current (I) and actual electric voltage (U) supplied to the motor;
**characterized in that**
in the step a) it additionally comprises determining an actual motor resistance (R) as a ratio of an actual electric voltage (U) divided by the corresponding actual electric current (I);
and additionally it comprises the further steps of:
b) determining the minimal inrush motor resistance (Rmin) for the motor starting time period (Ts);
c) determining the cut-off resistance threshold (Rthr) based on the minimal inrush motor resistance (Rmin), in particular as amounting 0.9-2.0 of the minimal inrush resistance (Rmin);
d) comparing the actual motor resistance (R) with the cut-off motor resistance threshold (Rthr);
e) cutting off an electrical energy supply to the motor if the actual motor resistance (R) is equal to or smaller than the cut-off resistance threshold (Rthr).

4. The method of Claim 3, **characterized in that** in the step f) an electrical energy supply to the motor is cut off if the actual motor resistance (R) is equal to or smaller than the cut-off resistance threshold (Rthr) for the predetermined cut-off time period.

5. A control system (1) for controlling an electrical energy supply to an electrical DC motor (3) of a driving unit of a vehicle mirror device rotatable between mechanically predetermined positions comprising:
- a current sensor (2) measuring an actual electric current (I) supplied to the motor (3);
- a control unit (4) cutting off a motor electrical energy supply if the actual electric current (I) is equal to or greater than the cut-off current threshold (Ithr),
**characterized in that**
the control unit (1) additionally
determines the maximal inrush current (Imax) for the motor starting time period (Ts); and then
determines the cut-off current threshold (Ithr) based on the maximal inrush current (Imax), in particular as amounting 0.5-1.1 of the maximal inrush current (Imax).

6. A control system (8) for controlling an electrical energy supply to an electrical DC motor (3) of a driving unit of a vehicle mirror device rotatable between mechanically predetermined positions comprising:
- a current sensor (2) measuring an actual electric current (I) supplied to the motor (3);
- a voltage sensor (9) measuring an actual electric voltage (U) supplied to the motor (3);
- a control unit (4) cutting off a motor electrical energy supply if the actual electric current (I) is equal to or greater than the cut-off current threshold (Ithr),
**characterized in that**
the control unit (4) additionally
- determines an actual motor resistance (R) as a ratio of an actual electric voltage (U) divided by the corresponding actual electric current (I);
- determines the minimal inrush motor resistance (Rmin) for the motor starting time period (Ts);
- determines the cut-off resistance threshold (Rthr) based on the minimal inrush motor resistance (Rmin), in particular as amounting 0.9-2.0 of the minimal inrush resistance (Rmin);
- compares the actual motor resistance (R) with the cut-off motor resistance threshold (Rthr); and
- cuts off an electrical energy supply to the motor (3) if the actual motor resistance (R) is equal to or smaller than the cut-off resistance threshold (Rthr).
